# EUROPÄISCHE PATENTANMELDUNG

(11) **EP 1 513 333 A1**
(43) Veröffentlichungstag der Anmeldung: **09.03.2005**
(21) Anmeldenummer: 04090307.2
(22) Anmeldetag: 06.08.2004
(51) Int. Cl.: H04M 15/00, H04Q 7/22

(54) **Verfahren zum Übertragen geldwerter Information an mehrere Dienstnutzer mittels eines Kommunikationsnetzes**

(30) Priorität: 08.09.2003 DE 10342065
(71) Anmelder: Siemens Aktiengesellschaft, 80333 München (DE)
(72) Erfinder: Lilge, Manfred, 13156 Berlin (DE); Ryll, Thomas, 38448 Wolfsburg (DE)

(57) **Zusammenfassung**

Die Erfindung betrifft ein Verfahren zum Erbringen eines Dienstes für mehrere Dienstnutzer (KEG1, KEG3, KEG4) mittels eines Telekommunikationsnetzes (TKN), wobei bei dem Verfahren eine für alle Dienstnutzer gemeinsame Dienstnachricht (DN) von einer dienstanbietenden Diensteinrichtung (DE) zu einem Verteilungsrechner (VR) des Telekommunikationsnetzes übertragen wird, von dem Verteilungsrechner eine Abrechnungsnachricht (AN) an ein Abrechnungssystem (AS) des Telekommunikationsnetzes übertragen wird, wobei die Abrechnungsnachricht ein Kennzeichen (B) des Dienstes enthält, von dem Abrechnungssystem mittels des Kennzeichens des Dienstes auf einen Dienstnutzerdatensatz (DSB) zugegriffen wird, in welchem die Dienstnutzer erfaßt sind, von dem Abrechnungssystem für die in dem Dienstnutzerdatensatz erfaßten Dienstnutzer eine Zahlungsabsicherung für den Dienst vorgenommen wird, und daraufhin mittels des Verteilungsrechners "Premium Contant" zu den Komunnikationsendgeräten derjenigen Dienstnutzer übertregen wird für die die Zahlungsabsicherung für den Dienst erfolgreich durchgeführt wurde.

## Beschreibung

Die Erfindung betrifft ein Verfahren zum Erbringen eines Dienstes für mehrere Dienstnutzer mittels eines Kommunikationsnetzes.

Es ist allgemein bekannt, dass in Telekommunikationsnetzen von Dienstanbietern Dienste für einen Dienstnutzer erbracht werden. Ein derartiger Dienst kann beispielsweise in der Übertragung von geldwerten Informationen von dem Dienstanbieter an den Dienstnutzer bestehen. Bei dieser Übertragung können z. B. schriftliche Kurznachrichten (SMS), Textdateien oder auch Klingeltöne zu dem Dienstnutzer übertragen werden. Bei der Diensterbringung wird oftmals eine Abrechnung des Dienstes vorgenommen, um dem Dienstnutzer Gebühren für die Erbringung des Dienstes in Rechnung zu stellen.

Der Erfindung liegt die Aufgabe zugrunde, ein einfaches und mit wenig Aufwand zu realisierendes Verfahren anzugeben, mit dem ein Dienst für mehrere Dienstnutzer erbracht werden kann.

Diese Aufgabe wird erfindungsgemäß gelöst durch ein Verfahren zum Erbringen eines Dienstes für mehrere Dienstnutzer mittels eines Telekommunikationsnetzes, wobei bei dem Verfahren eine für alle Dienstnutzer gemeinsame Dienstnachricht von einer dienstanbietenden Diensteinrichtung zu einem Verteilungsrechner des Telekommunikationsnetzes übertragen wird, von dem Verteilungsrechner eine Abrechnungsnachricht an ein Abrechnungssystem des Telekommunikationsnetzes übertragen wird, wobei die Abrechnungsnachricht ein Kennzeichen des Dienstes enthält, von dem Abrechnungssystem mittels des Kennzeichens des Dienstes auf einen Dienstnutzerdatensatz zugegriffen wird, in welchem die Dienstnutzer erfasst sind, von dem Abrechnungssystem für die in dem Dienstnutzerdatensatz erfassten Dienstnutzer eine Zahlungsabsicherung für den Dienst vorgenommen wird, und daraufhin mittels des Verteilungsrechners der Dienst für diejenigen der mehreren Dienstnutzer erbracht wird, für die die Zahlungsabsicherung erfolgreich durchgeführt wurde. Hierbei ist es besonders vorteilhaft, dass von dem Verteilungsrechner mit der Abrechnungsnachricht nur ein (im allgemeinen kurzes) Kennzeichen des Dienstes übertragen werden braucht und von dem Abrechnungssystem unter Nutzung dieses Kennzeichens auf den Dienstnutzerdatensatz zugegriffen werden kann. Es brauchen also insbesondere von dem Verteilungsrechner nicht für jeden einzelnen Dienstnutzer eigene Identitätsmerkmale zu dem Abrechnungssystem übertragen zu werden. Dadurch ergibt sich an der Schnittstelle zwischen Verteilungsrechner und Abrechnungssystem nur eine geringe zu übertragende Datenmenge, so dass eine derartige Schnittstelle einfach und mit wenig Aufwand realisiert werden kann.

Das erfindungsgemäße Verfahren kann so ablaufen, dass der Dienst für die Dienstnutzer erbracht wird, indem von dem Verteilungsrechner eine Dienstdatennachricht zu den Kommunikationsendgeräten der Dienstnutzer übertragen wird. Dadurch kann das erfindungsgemäße Verfahren vorteilhafterweise für die Übermittlung von sogenanntem "Premium Content" (also z. B. von geldwerten Informationen wie exklusiven Nachrichten, Börsenkursen oder Wirtschaftsinformationen) an die Dienstnutzer angewandt werden.

Bei dem Verfahren kann als Dienstdatennachricht die Dienstnachricht oder eine modifizierte Dienstnachricht verwendet werden. Unter einer modifizierten Dienstnachricht soll hier eine Nachricht verstanden werden, die die wesentlichen für die Dienstnutzer bestimmten Informationen der Dienstnachricht enthält, die aber z.B. im Detail anders als die Dienstnachricht aufgebaut sein kann.

Das erfindungsgemäße Verfahren kann so ablaufen, dass von dem Abrechnungssystem für jeden der Dienstnutzer des Dienstnutzerdatensatzes (dienstnutzerindividuell) eine eigene Zahlungsabsicherung für den Dienst durchgeführt wird, und bei einer erfolgreichen Zahlungsabsicherung für den Dienst, welche einen der Dienstnutzer betrifft, unabhängig vom Erfolg der die anderen Dienstnutzer betreffenden Zahlungsabsicherungen mittels des Verteilungsrechners der Dienst für den einen Dienstnutzers erbracht wird. Dabei ist insbesondere vorteilhaft, dass mit der Erbringung des Dienstes für den einen Dienstnutzer nicht gewartet zu werden braucht, bis die Zahlungsabsicherungen für alle Dienstnutzer erfolgreich abgeschlossen sind. Vielmehr kann sofort nach dem erfolgreichen Abschluss der einen Zahlungsabsicherung für den einen Dienstnutzer der Dienst erbracht werden. Dadurch ergibt sich ein außerordentlich schnell durchzuführendes Verfahren.

Bei dem Verfahren kann erfindungsgemäß im Fall einer erfolgreichen Zahlungsabsicherung für einen der Dienstnutzer die Erbringung des Dienstes für den einen Dienstnutzer und die Zahlungsabsicherungen für die Dienstnutzer, für welche zu diesem Zeitpunkt noch keine erfolgreiche Zahlungsabsicherung vorliegt, zeitlich parallel durchgeführt werden. Durch diese gleichzeitige bzw. sich zumindest zeitlich überschneidende bzw. überlappende Durchführung der Diensterbringung und der Zahlungsabsicherung für den Dienst wird vorteilhafterweise ein sehr schnell ablaufendes Verfahren erreicht. Dies resultiert letztendlich darin, dass die verschiedenen Dienstnutzer sehr schnell den von ihnen gewünschten Dienst nutzen können und lange Wartezeiten vermieden werden.

Das Verfahren kann erfindungsgemäß so ablaufen, dass von dem Abrechnungssystem eine Zahlungsabsicherungsbestätigungsnachricht an den Verteilungsrechner übertragen wird, wenn die Zahlungsabsicherung für einen Dienstnutzer erfolgreich durchgeführt ist, und daraufhin mittels des Verteilungsrechners der Dienst für diesen Dienstnutzer erbracht wird. Dabei ist von Vorteil, dass von dem Verteilungsrechner sofort nach Erhalt der Zahlungsabsicherungsbestätigungsnachricht mit der Diensterbringung für den einen Dienstnutzer begonnen werden kann.

Das erfindungsgemäße Verfahren kann auch so ablaufen, dass der Dienstnutzerdatensatz in einem Datenspeicher abgelegt ist, auf den sowohl das Abrechnungssystem als auch der Verteilungsrechner Zugriff haben, von dem Abrechnungssystem eine dienstnutzerbezogene Zahlungsabsicherungsinformation in dem Datenspeicher abgelegt wird, wenn die Zahlungsabsicherung für einen Dienstnutzer erfolgreich durchgeführt ist, von dem Verteilungsrechner aus dem Dienstnutzerdatensatz Informationen über den Dienstnutzer ausgelesen werden, für den die dienstnutzerbezogene Zahlungsabsicherungsinformation in dem Datenspeicher abgelegt ist, und daraufhin mittels des Verteilungsrechners der Dienst für diesen Dienstnutzer erbracht wird. Dabei kann vorteilhafterweise von dem Verteilungsrechner dann die Zahlungsabsicherungsinformation aus dem Datenspeicher ausgelesen werden, wenn bei dem Verteilungsrechner eine ausreichende Kapazität für das Erbringen des Dienstes vorhanden ist. Durch die direkte Zugriffs- und Auslesemöglichkeit wird also z.B. vorteilhafterweise erreicht, dass die Nachrichtenübertragungskapazität bzw. die Nachrichtenverteilungskapazität des Verteilungsrechners besonders gut ausgenutzt werden kann.

Das Verfahren kann erfindungsgemäß so ablaufen, dass in vorgewählten Zeitabständen oder zu vorgewählten Zeitpunkten von dem Verteilungsrechner aus dem Dienstnutzerdatensatz Informationen über eine Mehrzahl der Dienstnutzer ausgelesen werden, für die die dienstnutzerbezogene Zahlungsabsicherungsinformation in dem Datenspeicher abgelegt ist, und daraufhin mittels des Verteilungsrechners der Dienst für diejenigen Dienstnutzer erbracht wird, für die die Informationen aus dem Dienstnutzerdatensatz ausgelesen worden sind. Durch das Auslesen von Informationen über mehrere Dienstnutzer in einem Auslesevorgang wird insgesamt die Anzahl der benötigten Auslesevorgänge reduziert. Insbesondere unter Berücksichtigung eines pro Auslesevorgang bei der Datenübertragung oftmals auftretenden "Datenoverheads" wird dadurch erreicht, dass beim Auslesen des Datenspeichers nur geringe Datenmengen zu dem Verteilungsrechner übertragen werden brauchen.

Bei dem erfindungsgemäßen Verfahren kann der Zugriff des Abrechnungssystems und/oder des Verteilungsrechners auf den Datenspeicher unter Benutzung des Datenübertragungsprotokolls "Lightweight Directory Access Protocol" durchgeführt werden.

Bei dem erfindungsgemäßen Verfahren kann die Zahlungsabsicherung für den Dienst auf verschiedene Weise vorgenommen werden. So wird es als vorteilhaft angesehen, dass die Zahlungsabsicherung für den Dienst vorgenommen wird, indem ein dem Dienst zugeordneter Kontenbetrag von einem Konto des Dienstnutzers abgebucht wird.

Das erfindungsgemäße Verfahren kann auch so ablaufen, dass die Zahlungsabsicherung für den Dienst vorgenommen wird, indem auf einem Konto des Dienstnutzers ein dem Dienst zugeordneter Kontenbetrag reserviert wird. In diesem Fall erfolgt die Abbuchung des Kontenbetrages später nach Erbringung der Dienstleistung.

Vorzugsweise wird der reservierte Kontenbetrag von dem Konto abgebucht, nachdem mittels des Verteilungsrechners der Dienst erbracht worden ist. Damit wird vermieden, dass von dem Konto des Dienstnutzers im Falle einer fehlschlagenden Diensterbringung der Kontenbetrag abgebucht wird.

Als Konto kann ein vorausbezahltes Guthabenkonto des Dienstnutzers verwendet werden. Dies ermöglicht es vorteilhafterweise, dass erfindungsgemäße Verfahren gemeinsam mit in Telekommunikationsnetzen an sich bekannten vorausbezahlten "Prepaid-Konten" zu nutzen.

Das erfindungsgemäße Verfahren kann auch so ablaufen, dass zur Zahlungsabsicherung für den Dienst ein dem Dienstnutzer zugeordnetes Gebührenticket für eine spätere Rechnungserstellung erzeugt wird. Bei dieser Ausgestaltungsform des erfindungsgemäßen Verfahrens können vorteilhafterweise in Telekommunikationsnetzen an sich bekannte Gebührennacherhebungseinrichtungen (Postprocessing-Abrechnungssysteme) für die Abrechnung verwendet werden.

Unter einer "Zahlungsabsicherung für den Dienst" wird im Rahmen dieser Erfindung also beispielsweise ein Abbuchen eines Geldbetrages von einem Konto, ein Reservieren des Geldbetrages auf dem Konto (das Abbuchen erfolgt dann später) oder auch das Erzeugen von den Geldbetrag betreffenden Gebührentickets verstanden.

Zur weiteren Erläuterung der Erfindung ist in
Figur 1 schematisch ein Ausführungsbeispiel eines Telekommunikationsnetzes zusammen mit beispielhaften Verfahrensschritten des erfindungsgemäßen Verfahrens, in
Figur 2 schematisch ein weiteres Ausführungsbeispiel eines Telekommunikationsnetzes zusammen mit weiteren beispielhaften Verfahrensschritten des erfindungsgemäßen Verfahrens, in
Figur 3 ein weiteres Ausführungsbeispiel des erfindungsgemäßen Verfahrens mit einer Reservierung von Kontenbeträgen und in
Figur 4 Ausführungsbeispiele für in einem Datenspeicher abgespeicherte Dienstnutzerdatensätze dargestellt.

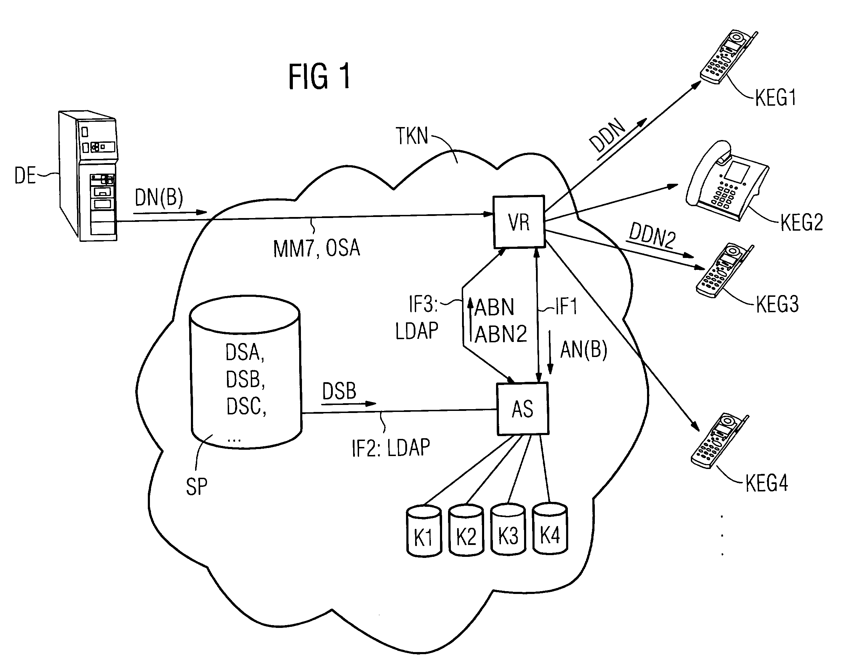

In Figur 1 ist schematisch ein Telekommunikationsnetz TKN mit erfindungswesentlichen Netzwerkelementen dargestellt. Bei diesem Telekommunikationsnetz kann es sich beispielsweise um ein Mobilfunknetz der zweiten oder dritten Generation oder auch um ein Telefonfestnetz handeln. Das Telekommunikationsnetz TKN weist einen Verteilungsrechner VR auf, bei dem es sich im Ausführungsbeispiel um einen Multicast-Server handelt. Ein solcher Verteilungsrechner VR wird auch als Broadcast-Multicast-Service-Center (BM-SC) bezeichnet und ist aus der Druckschrift "3GPP TR 23.846 6.1.0 (2002-12), Technical Report, 3rd Generation Partnership Project; Technical Specification Group Services and System Aspects; Multimedia Broadcast/Multicast Service (MBMS); Architecture and functional description, (Release 6)", insbesondere aus Kapitel 6.7 bekannt. Das Telekommunikationsnetz TKN wird von einem Netzwerkoperator verwaltet und administriert.

An den Verteilungsrechner VR ist eine dienstanbietende Diensteinrichtung DE (die auch als Application-Server, Dienst-Server oder Content-Server bezeichnet wird und von einem Leistungserbringer verwaltet wird) angeschlossen. Im Beispiel handelt es sich bei dieser Diensteinrichtung DE um einen Server eines Rechnernetzes, von dem aus eine Multimedia-Message (MMS) an eine Gruppe von Dienstnutzern versendet werden soll. Im Ausführungsbeispiel handelt es sich bei dem zu erbringenden Dienst also um das Übertragen einer Nachricht (Multimedia-Message) von einem Server an mehrere Kommunikationsendgeräte von Dienstnutzern. Die mehreren Dienstnutzer (Leistungsempfänger) erhalten dabei (zeitnah) über ihre Kommunikationsendgeräte gleichartige Nachrichten. Insofern wird ein Dienst (Versenden einer Nachricht) für mehrere Dienstnutzer erbracht. Die Diensteinrichtung DE ist mit dem Verteilungsrechner VR mittels einer Datenverbindung verbunden, über die z. B. mittels der an sich bekannten Schnittstelle MM7 (vgl. Standard 3GPP TS 23.140 V6.2.0 (2003-06), Technical Specification, 3rd Generation Partnership Project; Technical Specification Group Terminals; Multimedia Messaging Service (MMS); Functional description; Stage 2 (Release 6), insbesondere Kapitel 8.7) oder über die an sich bekannte OSA-Schnittstelle Daten ausgetauscht werden können. Der Verteilungsrechner VR ist (zumindest temporär) mit einem ersten Kommunikationsendgerät KEG1 eines ersten Dienstnutzers, einem zweiten Kommunikationsendgerät KEG2 eines zweiten Dienstnutzers, einem dritten Kommunikationsendgerät KEG3 eines dritten Dienstnutzers und einem vierten Kommunikationsendgerät KEG4 eines vierten Dienstnutzers verbunden. Bei dem ersten, dritten und vierten Kommunikationsendgerät handelt es sich im Beispiel um ein Mobiltelefon, bei dem zweiten Kommunikationsgerät handelt es sich um ein Festnetztelefon. Es sind aber auch weitere Kommunikationsendgeräte anwendbar, beispielsweise tragbare Rechner mit Mobilfunkschnittstelle, persönliche digitale Assistenten (PDA) oder Palmtops.

Von der Diensteinrichtung DE eines MMS-Dienstanbieters wird zu Beginn des Verfahrens eine Dienstnachricht DN über die oben erwähnte Datenverbindung an den Verteilungsrechner VR übertragen. Diese Dienstnachricht DN enthält sämtliche Informationen, die mittels der Multimedia-Message zu den Kommunikationsendgeräten übertragen werden sollen; beispielsweise enthält die Dienstnachricht DN die komplette Multimedia-Message MMS. Außerdem wird mit der Dienstnachricht DN ein Kennzeichen B des zu erbringenden Dienstes übertragen (im Ausführungsbeispiel wird der Dienst der Übertragung der Nachricht MMS an ausgewählte Kommunikationsendgeräte kurz als "Dienst B" bezeichnet). Bei dem Verfahren wird allgemein eine Dienstnachricht zu dem Verteilungsrechner übertragen, wobei durch diese Dienstnachricht das Erbringen des Dienstes für alle der mehreren Dienstnutzer anregt wird. Diese Dienstnachricht DN übermittelt also einen Auftrag an das Telekommunikationsnetz des Netzwerkoperators, den Dienst B zu erbringen. Der mittels der Multimedianachricht MMS zu übertragende "Premium Content" wird in diesem Ausführungsbeispiel ebenfalls mittels der Dienstnachricht DN zu dem Telekommunikationsnetz übermittelt; in einem anderen Ausführungsbeispiel könnte dieser "Premium Content" aber auch in dem Telekommunikationsnetz TKN z.B. in einer Datenbank vorliegen und von dem Verteilungsrechner VR aus dieser Datenbank abgerufen werden. Der Verteilungsrechner VR erkennt anhand des mit der Dienstnachricht DN mitübertragenen Kennzeichens B die Art des von dem Telekommunikationsnetz TKN zu erbringenden Dienstes. Zur Durchführung einer den Dienst B betreffenden Zahlungsabsicherung sendet der Verteilungsrechner VR eine Abrechnungsnachricht AN, welche das Kennzeichen B des Dienstes enthält, an ein Abrechnungssystem AS (charging system) des Telekommunikationsnetzes TKN. Derartige Abrechnungssysteme werden in Telekommunikationsnetzen zur Abrechnung von Gebühren und Kosten verwendet, es sind allgemein z.B. sogenannte Prepaid-Abrechnungssysteme und Postpaid-Abrechnungssysteme (Postprocessing-Abrechnungssysteme) bekannt.

Das Kennzeichen B des Dienstes stellt eine Referenz auf einen unten ausführlich beschriebenen Dienstnutzerdatensatz (im Ausführungsbeispiel auf den Dienstnutzerdatensatz DSB) dar. Die Datenübertragung zwischen dem Verteilungsrechner VR und dem Abrechnungssystem AS erfolgt über eine echtzeitfähige Schnittstelle IF1, die auch als "Online-Interface" bezeichnet werden kann. Diese Schnittstelle IF1 ermöglicht einen Zugriff auf das Abrechnungssystem und auf diesem nachgeschaltete kontenführende Systeme.

In einem Datenspeicher SP (beispielsweise einer Datenbank) des Telekommunikationsnetzes TKN sind Dienstnutzerdatensätze DSA, DSB, DSC usw. abgespeichert, welche jeweils einem Dienst A, B, C usw. zugehörig sind. Insbesondere ist für den in dem Ausführungsbeispiel beschriebenen Dienst B der Dienstnutzerdatensatz DSB abgespeichert. Diese Dienstnutzerdatensätze können in einem anderen Ausführungsbeispiel auch in einem Speicher des Verteilungsrechners VR abgespeichert sein.

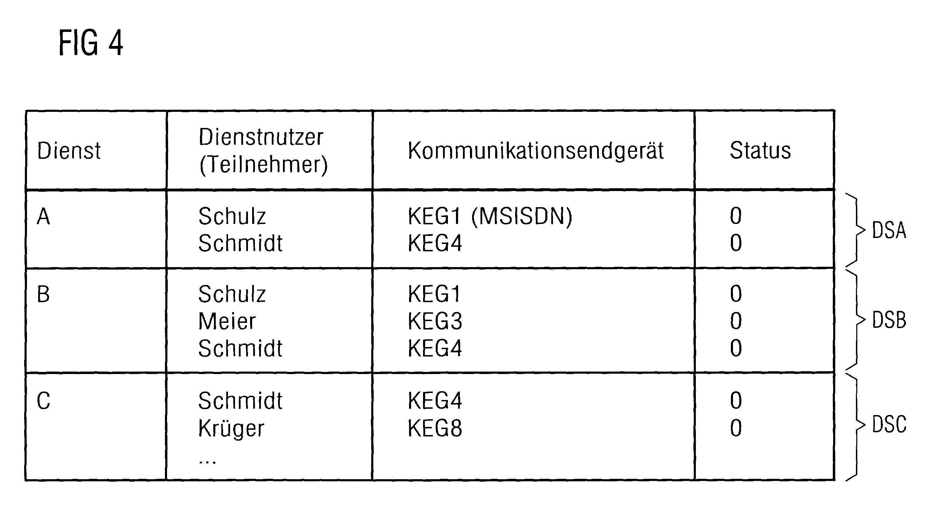

In Figur 4 ist beispielhaft der Inhalt der drei Dienstnutzerdatensätze DSA, DSB und DSC dargestellt. Der Dienstnutzerdatensatz DSB enthält das Kennzeichen B (z.B. eine Codenummer) des Dienstes B, Namen oder andere Identifikationsmerkmale der Teilnehmer (Dienstnutzer) Schulz, Meier und Schmidt, welche den Dienst B abonniert (subskribiert) haben, Kennungen (z.B. Telefonrufnummern MSISDN) der von den Dienstnutzern verwendeten Kommunikationsendgeräte KEG1, KEG3 und KEG4 sowie einen Status für jeden Dienstnutzer bzw. dessen Kommunikationsendgerät. Dieser Status weist als Voreinstellung (Default-Wert) einen Wert "O" (Null) auf; der Status kann weiterhin die Werte "CP", "CNS", "CS", "RP", "RNS", "RS", "MSS" und "MNS" annehmen. Diese Statuswerte haben folgende Bedeutung:
Status CP: Abbuchung wird derzeit durchgeführt (Charging Pending),
Status CNS: Abbuchung nicht erfolgreich (Charging Not Successful),
Status CS: Abbuchung erfolgreich (Charging Successful), Status RP: Reservierung wird derzeit durchgeführt (Reservation Pending),
Status RNS: Reservierung nicht erfolgreich (Reservation Not Successful),
Status RS: Reservierung erfolgreich (Reservation Successful), Status MSS: Nachricht erfolgreich gesendet (Message sent successfully), d.h. Dienst erbracht,
Status MNS: Nachricht nicht gesendet (Message not sent), d.h. Dienst nicht erbracht.

Der Dienstnutzerdatensatz DSB enthält also die Information, dass die Dienstnutzer Schulz, Meier und Schmidt den Dienst B abonniert haben, wobei der Dienstnutzer Schulz das Kommunikationsendgerät KEG1 benutzt und der Status des Dienstnutzers Schulz noch seinen Default-Wert "0" aufweist. Weiterhin benutzt der Dienstnutzer Meier das Kommunikationsendgerät KEG3 und hat den Default-Status "0"; der Dienstnutzer Schmidt benutzt das Kommunikationsendgerät KEG4, welches ebenfalls den Default-Status "0" hat. In analoger Weise sind Dienstnutzerdatensätze DSA und DSC für weitere Dienste A und C in dem Datenspeicher SP abgespeichert.

In Figur 1 ist weiterhin dargestellt, wie das Abrechnungssystem AS nach Erhalt der Abrechnungsnachricht AN(B) mittels des Kennzeichens B des Multimediadienstes die Daten des Dienstnutzerdatensatzes DSB aus dem Datenspeicher SP ausliest. Das Abrechungssystem AS entnimmt dem Dienstnutzerdatensatz DSB, dass der Dienstnutzer Schulz den Dienst B abonniert hat. Dem Dienstnutzer Schulz ist ein Konto K1 zugeordnet, auf welches das Abrechnungssystem AS Zugriff hat. Im Ausführungsbeispiel handelt es sich bei dem Konto K1 um ein Prepaidkonto, auf das der Dienstnutzer Schulz vor Beginn des Verfahrens einen ausreichenden Guthabenbetrag eingezahlt hat. Das Abrechnungssystem AS bucht nun einen dem Dienst B zugeordneten Kontenbetrag (z. B. 2 Euro) von dem Guthabenkonto K1 des Dienstnutzers Schulz ab und sichert damit die den Dienst B betreffende Zahlung bezüglich des Dienstnutzers Schulz ab. Dabei wird die Zahlungsabsicherung für den Dienstnutzer Schulz individuell durchgeführt, d. h. die Zahlungsabsicherung für den Dienstnutzer Schulz erfolgt unabhängig von Zahlungsabsicherungen für die anderen Dienstnutzer Meier und Schmidt. Der abzubuchende Kontenbetrag stellt eine Gebühr oder einen Preis dar, welche von dem Dienstnutzer für die Erbringung des Dienstes zu zahlen sind. Der Kontenbetrag kann verschiedene Ausprägungen aufweisen, er kann z.B. in Form eines Geldbetrages, einer Anzahl von Telefoneinheiten oder allgemein einer Anzahl von Guthabeneinheiten vorliegen. Die Höhe der für die verschiedenen Dienste anzuwendenden Kontenbeträge können in dem Abrechnungssystem AS oder in dem Speicher SP abgespeichert sein.

Sobald die Zahlungsabsicherung für den Dienst B für den Dienstnutzer Schulz erfolgreich ist (weil z. B. das Konto K1 des Dienstnutzers Schulz ein für die Abbuchung des Kontenbetrages ausreichend großes Guthaben aufweist), sendet das Abrechnungssystem AS eine Zahlungsabsicherungsbestätigungsnachricht ABN (welche den Dienstnutzer Schulz bzw. sein Kommunikationsendgerät KEG1 eindeutig bezeichnet) an den Verteilungsrechner VR. Sobald der Verteilungsrechner VR diese Zahlungsabsicherungsbestätigungsnachricht ABN erhält, erbringt er den Dienst für den Dienstnutzer Schulz, indem er eine Dienstdatennachricht DDN in Form der Multimedianachricht MMS an das Kommunikationsendgerät KEG1 des Dienstnutzers Schulz sendet. Als Dienstdatennachricht DDN kann dabei die Dienstnachricht DN verwendet werden (in diesem Fall wird eine Dienstnachricht DN verwendet, die bereits die Form der Multimedianachricht MMS aufweist); oder es wird eine modifizierte Dienstnachricht verwendet (in diesem Fall enthält die Dienstnachricht DN z.B. die mittels der Multimedianachricht MMS zu übertragenden Informationen; diese Informationen werden in die Dienstdatennachricht DDN eingeschrieben, die Dienstdatennachricht DDN weist allerdings gegenüber der Dienstnachricht DN eine veränderte, modifizierte Form auf).

Die Zahlungsabsicherungsbestätigungsnachricht ABN wird dabei nicht über die Schnittstelle IF1 zu dem Verteilungsrechner VR übertragen, vielmehr wird die Zahlungsabsicherungsbestätigungsnachricht ABN mittels des Datenübertragungsprotokolls "Lightweight Directory Access Protocol" (LDAP) über eine Schnittstelle IF3 zwischen dem Abrechnungssystem AS und dem Verteilungsrechner VR übertragen.

Unmittelbar nachdem das Abrechnungssystem AS die Zahlungsabsicherungsbestätigungsnachricht ABN an den Verteilungsrechner VR gesendet hat, beginnt das Abrechnungssystem AS mit der Zahlungsabsicherung des Dienstes B für den zweiten in dem Dienstnutzerdatensatz DSB erfassten Dienstnutzer Meier. Dazu greift das Abrechnungssystem AS auf ein Gebührenkonto K3 des Dienstnutzers Meier zu und belastet dieses Konto K3 mit dem dem Dienst B zugeordneten Gebührenbetrag; dieser Gebührenbetrag wird von dem Konto K3 abgebucht. Diese den Dienstnutzer Meier betreffende Zahlungsabsicherung für den Dienst B findet zeitlich parallel statt zu dem Senden der Dienstdatennachricht DDN von dem Verteilungsrechner VR zu dem ersten Kommunikationsendgerät KEG1. Die Erbringung des Dienstes für den Dienstnutzer Schulz (für den bereits eine erfolgreiche Zahlungsabsicherung stattgefunden hat) findet also zeitlich parallel bzw. gleichzeitig statt mit der Zahlungsabsicherung für den Dienst B betreffend den Dienstnutzer Meier (für den noch keine erfolgreiche Zahlungsabsicherung vorliegt). Dadurch wird erreicht, dass das Abrechnungssystem AS nicht auf ein Ende der Diensterbringung durch den Verteilerrechner VR warten muss. Ebenso braucht der Verteilungsrechner VR nicht auf ein Ende der Zahlungsabsicherung für den Dienst B für alle Dienstnutzer des Dienstnutzerdatensatzes DSB warten. Dadurch ergibt sich ein sehr schneller Verfahrensablauf.

Es wird also von dem Abrechnungssystem AS die Zahlungsabsicherungsbestätigungsnachricht ABN an den Verteilungsrechner VR übertragen, sobald die Zahlungsabsicherung für einen Dienstnutzer erfolgreich beendet ist. Daraufhin wird von dem Verteilungsrechner VR der Dienst für genau diesen Dienstnutzer erbracht, ohne auf eine Beendigung der Zahlungsabsicherungen für die anderen Dienstnutzer zu warten.

Bei einer erfolgreichen Zahlungsabsicherung des Dienstes für einen Dienstnutzer wird also der Dienst für diesen Dienstnutzer erbracht, und zwar unabhängig davon, ob andere Zahlungsabsicherungen für andere Dienstnutzer des Dienstnutzerdatensatzes erfolgreich verlaufen sind oder nicht.

Sobald die Zahlungsabsicherung für den Dienstnutzer Meier erfolgreich beendet ist, wird eine weitere, den Dienstnutzer Meier betreffende Zahlungsabsicherungsbestätigungsnachricht ABN2 zu dem Verteilungsrechner VR übertragen. Unmittelbar nach Empfang der Zahlungsabsicherungsbestätigungsnachricht ABN2 erbringt der Verteilungsrechner VR den Dienst B, indem der Verteilungsrechner VR eine zweite Dienstdatennachricht DDN2 an das dritte Kommunikationsendgerät KEG3 des Dienstnutzers Meier sendet. Noch während der Verteilungsrechner VR die zweite Dienstdatennachricht DDN2 absendet, führt das Abrechnungssystem AS bereits die Zahlungsabsicherung des Dienstes B für den dritten Dienstnutzer Schmidt des Dienstnutzerdatensatzes DSB durch. Der Ablauf wiederholt sich dann entsprechend.

Sollte für einen Dienstnutzer keine erfolgreiche Zahlungsabsicherung durchgeführt werden, dann sendet das Abrechnungssystem AS keine Zahlungsabsicherungsbestätigungsnachricht an den Verteilungsrechner, sondern beginnt automatisch mit der Zahlungsabsicherung für den nächsten in dem Dienstnutzerdatensatz DSB erfassten Dienstnutzer.

Eine Zahlungsabsicherung für den Dienst kann von dem Abrechnungssystem AS auch vorgenommen werden, indem ein dem entsprechenden Dienstnutzer zugeordnetes Gebührenticket (Gebühren-Datensatz) erzeugt wird, welches später während eines Rechnungserstellungsprozesses (Postprocessing) herangezogen wird.

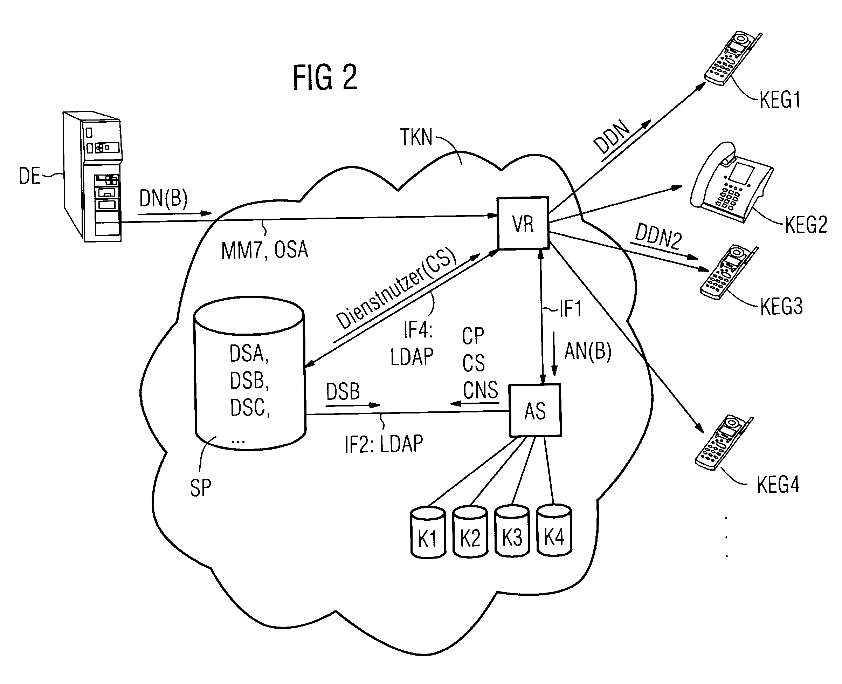

In Figur 2 ist ein weiteres Ausführungsbeispiel des erfindungsgemäßen Verfahrens dargestellt, welches in weiten Teilen mit dem im Zusammenhang mit der Figur 1 beschriebenen Verfahren übereinstimmt. Im Unterschied zu dem Verfahren nach der Figur 1 hat bei dem Verfahren nach der Figur 2 nicht nur das Abrechnungssystem AS, sondern auch der Verteilungsrechner VR Zugriff auf den in dem Datenspeicher SP abgespeicherten Dienstnutzerdatensatz DSB. Sobald von dem Abrechnungssystem AS die Zahlungsabsicherung für einen Dienstnutzer (beispielsweise für den Dienstnutzer Schulz des Dienstnutzerdatensatzes DSB) erfolgreich abgeschlossen ist, wird von dem Abrechnungssystem AS eine auf den Dienstnutzer (z.B. auf den Dienstnutzer Schulz) bezogene Zahlungsabsicherungsinformation in dem Datenspeicher SP abgelegt. Zum Ablegen dieser dienstnutzerbezogenen Zahlungsabsicherungsinformation schreibt das Abrechnungssystem AS einen Eintrag in den Dienstnutzerdatensatz DSB des Datenspeichers SP ein, d.h. das Abrechnungssystem AS verändert schreibend den Dienstnutzerdatensatz DSB. Dadurch wird der Status des Dienstnutzers Schulz verändert; anstelle der standardmäßig voreingestellten Statusinformation 0 (Default) wird als Status des Dienstnutzes Schulz die Statusinformation "CS" (Abbuchung erfolgreich) in den Dienstnutzerdatensatz DSB eingeschrieben. Die Statusinformation "CS" stellt also die dienstnutzerbezogene Zahlungsabsicherungsinformation dar, die in dem Datenspeicher SP abgelegt wird, wenn die Zahlungsabsicherung für einen Dienstnutzer erfolgreich durchgeführt worden ist.

In dem Zeitraum zwischen Beginn der Zahlungsabsicherung für einen Dienstnutzer und erfolgreichem oder nicht erfolgreichem Abschluss der Zahlungsabsicherung kann der Status dieses Dienstnutzers auf "CP" (Charging pending) gesetzt werden. Bei einem nicht erfolgreichen Abschluss der Zahlungsabsicherung für einen Dienstnutzer wird der Status dieses Dienstnutzers auf "CNS" (Charging not successful) gesetzt.

Von dem Verteilungsrechner VR werden fortlaufend in vorgewählten (z. B. kurzen) Zeitabständen oder zu vorgewählten Zeitpunkten Informationen über den bzw. die Dienstnutzer aus dem Datenspeicher SP ausgelesen, für den bzw. die die dienstnutzerbezogene Zahlungsabsicherungsinformation in dem Datenspeicher SP abgelegt ist. Dabei werden in einem Auslesevorgang z.B. jeweils Informationen über mehrere Dienstnutzer und deren Kommunikationsendgeräte aus dem Dienstnutzerdatensatz ausgelesen, für die zuvor der Status auf "CS" (Charging successful) gesetzt wurde. Nach jedem derartigen Auslesevorgang wird mittels des Verteilungsrechners VR der Dienst für diese Dienstnutzer bzw. deren Kommunikationsendgeräte erbracht, indem Dienstdatennachrichten von dem Verteilungsrechner VR zu den entsprechenden Kommunikationsendgeräten übertragen werden. Dabei kann nach einem einzigen Auslesevorgang jeweils eine Dienstdatennachricht an mehrere Kommunikationsendgeräte (die mehreren Dienstnutzern zugeordnet sind) gesendet werden. Der Zugriff des Abrechnungssystems AS und des Verteilungsrechners VR auf den Datenspeicher SP findet unter Benutzung des Datenübertragungsprotokolls LDAP statt.

Bei beiden beschriebenen Ausführungsformen des erfindungsgemäßen Verfahrens führt also das Abrechnungssystem AS die Zahlungsabsicherung (in Form einer Abbuchung) für den Dienst durch und gleichzeitig erbringt der Verteilungsrechner VR den Dienst, indem er die entsprechenden Dienstdatennachrichten an die Kommunikationsendgeräte sendet.

Sobald das Abrechnungssystem AS für sämtliche Dienstnutzer des Dienstnutzerdatensatzes eine Zahlungsabsicherung vorgenommen hat und (bei einer erfolgreichen Zahlungsabsicherung) den Status des jeweiligen Dienstnutzers auf "CS" bzw. (bei erfolgloser Zahlungsabsicherung) den Status auf "CNS" gesetzt hat, beendet das Abrechnungssystem die Zahlungsabsicherung für diesen Dienst. Wenn der Verteilungsrechner VR an alle Dienstnutzer mit dem Status "CS" den "Premium Content" (hochwertige Daten) mittels der Dienstdatennachrichten ausgeliefert hat, ist für den Verteilungsrechner VR die Erbringung des Dienstes beendet.

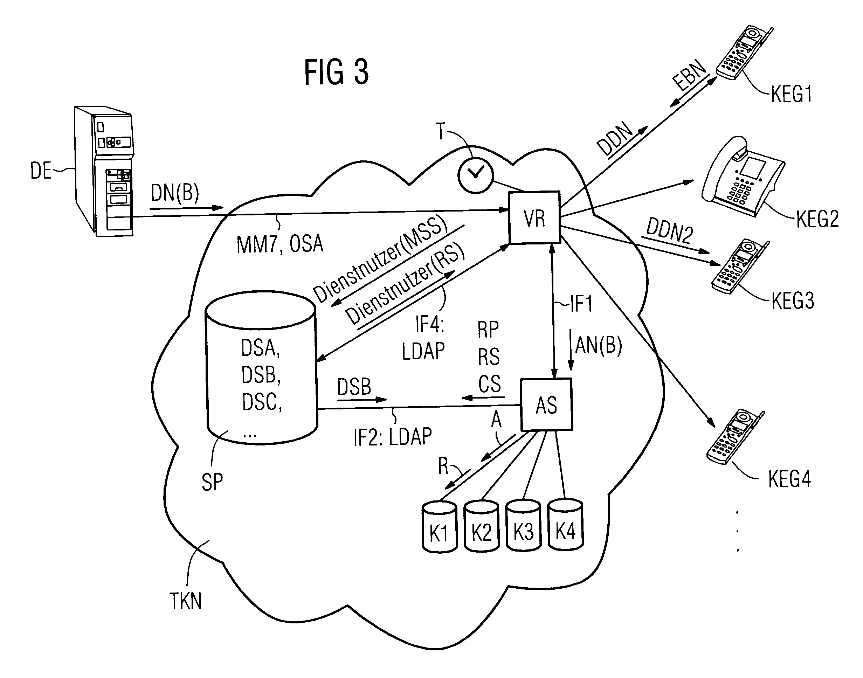

In Figur 3 ist ein weiteres Ausführungsbeispiel des erfindungsgemäßen Verfahrens dargestellt, bei dem von dem Abrechnungssystem AS eine Zahlungsabsicherung für den Dienst vorgenommen wird, indem auf einem Konto des Dienstnutzers entsprechend des benutzten Dienstes eine Reservierung vorgenommen wird. Der Anfang dieses Verfahrens stimmt mit den im Zusammenhang mit den Figuren 1 und 2 beschriebenen Verfahren überein. Nachdem das Abrechnungssystem AS die Abrechnungsnachricht AN empfangen hat, ermittelt das Abrechnungssystem AS den Preis für die Nutzung des Dienstes B und nimmt eine entsprechende Reservierung von Geldmitteln vor. Das Abrechungssystem AS reserviert zuerst mittels einer Reservierungsnachricht R auf dem Konto K1 des Dienstnutzers Schulz einen dem Dienst B zugeordneten Geldbetrag. Bei Beginn des Reservierungsvorganges schreibt das Abrechnungssystem AS in den Dienstnutzerdatensatz DSB für den Dienstnutzer Schulz einen Status "RP" (Reservation pending) ein, um zu kennzeichnen, dass aktuell für den Dienstnutzer Schulz eine Reservierung durchgeführt wird. Das Konto K1 des Dienstnutzers Schulz wird also mit einem dem Dienst "B" zugeordneten Kontenbetrag belastet, indem auf dem Konto ein dem Kontenbetrag entsprechender Geldbetrag reserviert wird. Wenn die Reservierung erfolgreich beendet wurde, weil auf dem Konto K1 des Dienstnutzers Schulz ein für die Reservierung ausreichend großer Guthabenbetrag vorhanden ist, dann verändert das Abrechnungssystem AS den Dienstnutzerdatensatz DSB dahingehend, dass für den Dienstnutzer Schulz der Status "RS" (Reservation Successful) in den Dienstnutzerdatensatz DSB eingetragen wird. Sollte die Reservierung nicht erfolgreich ablaufen (weil beispielsweise auf dem Konto K1 kein ausreichendes Guthaben vorhanden ist), so wird der Status des Dienstnutzers Schulz auf "RNS" (Reservation not successful) gesetzt. In diesem Ausführungsbeispiel wird also eine Zahlungsabsicherung für den Dienst vorgenommen, indem auf dem Konto des Dienstnutzers entsprechend der Höhe des für den Dienst abzurechnenden Kontenbetrages (z.B. eines Geldbetrages) eine Reservierung vorgenommen wird.

Sobald diese Reservierung und damit die Zahlungsabsicherung für den Dienst erfolgreich abgeschlossen ist, wird der Dienst mittels des Verteilungsrechners VR für den Dienstnutzer erbracht. Dazu liest der Verteilungsrechner VR periodisch die Daten des Dienstnutzerdatensatzes DSB über die Schnittstelle IF4 aus dem Speicher SP aus. Daraufhin erbringt der Verteilungsrechner VR den Dienst in bekannter Weise für diejenigen Teilnehmer, bei denen die Reservierung erfolgreich war (für die also der Status "RS" in dem Dienstnutzerdatensatz eingetragen ist).

In diesem Ausführungsbeispiel erbringt also der Verteilungsrechner VR den Dienst für diejenigen Teilnehmer, für die bereits eine erfolgreiche Reservierung durchgeführt wurde. Gleichzeitig nimmt das Abrechnungssystem AS Reservierungen für weitere Teilnehmer des entsprechenden Dienstes vor.

In diesem Ausführungsbeispiel wird der Dienst für den Teilnehmer Schulz erbracht, indem - wie bei den Ausführungsbeispielen nach den Figuren 1 und 2 - die Dienstdatennachricht DDN an das Kommunikationsendgerät KEG1 des Teilnehmers Schulz übertragen wird. Eine Empfangseinrichtung (beispielsweise eine Client-Applikation in dem Mobiltelefon KEG1) empfängt die Dienstdatennachricht DDN und sendet daraufhin eine Empfangsbestätigungsnachricht EBN an den Verteilungsrechner VR zurück. Daraufhin ändert der Verteilungsrechner VR den Status des Dienstnutzers Schulz auf "MSS" (Message sent successfully), da der Dienst für diesen Dienstnutzer erfolgreich erbracht wurde (die Multimediamessage DDN wurde erfolgreich an den Dienstnutzer übermittelt).

Für jeden Dienstnutzer überwacht der Verteilungsrechner VR eine Zeitgebereinheit T und versucht, innerhalb einer vorbestimmten Zeitspanne den Dienst für den Dienstnutzer zu erbringen, d. h. in diesem Ausführungsbeispiel die Dienstdatennachricht DDN an das Kommunikationsendgerät KEG1 zu übertragen. Wenn innerhalb der vorbestimmten Zeitspanne die Übertragung (Zustellung) der Dienstdatennachricht und damit die Erbringung des Dienstes nicht möglich ist, dann ändert der Verteilungsrechner VR den Status für den jeweiligen Dienstnutzer auf "MNS" (Message not sent). Damit wird die Information abgespeichert, dass der Dienst für den Dienstnutzer nicht erbracht werden konnte.

Das Abrechnungssystem AS liest nun regelmäßig aus dem Dienstnutzerdatensatz DSB die Information aus, ob Dienstnutzer dieses Dienstnutzerdatensatzes den Status "MNS" aufweisen. Ist das der Fall, dann wird für diese Dienstnutzer die Reservierung rückgängig gemacht (Abbruch der Reservierung), d.h. die reservierten Beträge auf den Konten dieser Dienstnutzer werden wieder freigegeben. Damit wird der Tatsache Rechnung getragen, dass der Dienst für diese Dienstnutzer nicht erbracht werden konnte.

Das Abrechnungssystem AS liest ebenfalls regelmäßig aus dem Speicher SP die Information aus, für welche Dienstnutzer der Status "MSS" (Message sent successfully) von dem Verteilungsrechner VR in den Dienstnutzerdatensatz eingetragen wurde. Für diese Teilnehmer (im Beispiel für den Dienstnutzer Schulz) wird der bereits reservierte Kontenbetrag mittels einer Abbuchungsnachricht A von dem Konto abgebucht, da für diese Teilnehmer der Dienst erbracht worden ist. Nach erfolgreicher Abbuchung der reservierten Kontenbeträge wird der Status dieser Teilnehmer auf "CS" (Charging successful) gesetzt.

Bei diesem Ausführungsbeispiel wird das Verfahren beendet, wenn bei allen Dienstnutzern des Dienstnutzerdatensatzes DSB entweder der Status "CS" (Charging Successful) oder der Status "RNS" (Reserveration Not Successful) gesetzt ist. Bei Beginn eines neuen Verfahrensablaufes (d.h. bei Auftreten einer neuen Dienstnachricht und einer neuen Abrechnungsnachricht) wird der Status auf die Default-Einstellung "0" zurückgesetzt.

Mittels der Figur 3 wurde ein Ausführungsbeispiel des erfindungsgemäßen Verfahrens beschrieben, bei dem das Abrechnungssystem AS eine Reservierung von Kontenbeträgen auf Konten von Dienstnutzern vornimmt und gleichzeitig der Verteilungsrechner VR den Dienst für solche Dienstnutzer erbringt, für die bereits eine erfolgreiche Reservierung vorgenommen worden ist. Bei diesem Ausführungsbeispiel wird vor der Diensterbringung eine Reservierung eines Kontenbetrages für den jeweiligen Dienst vorgenommen und nach erfolgreicher Diensterbringung wird der reservierte Kontenbetrag von dem Konto abgebucht. Der Erfolg der Diensterbringung wird ermittelt, indem an dem Kommunikationsendgerät KEG1 eine Empfangskontrolle für die Dienstdatennachricht DDN durchgeführt wird und bei erfolgreichem Empfang der Dienstdatennachricht DDN die Empfangsbestätigungsnachricht EBN an den Verteilungsrechner VR gesendet wird.

Es wurden vorstehend Verfahren beschrieben, mit denen mittels eines Telekommunikationsnetzes ein Dienst für mehrere Dienstnutzer erbracht (ausgeführt) werden kann. Insbesondere bei sehr vielen Dienstnutzern (bei sog. Massendiensten mit oftmals mehreren tausend Dienstnutzern) wird eine effiziente Abrechnung des zu erbringenden Dienstes ermöglicht. Dabei wird insbesondere die Schnittstelle IF1 (online Charging Interface) zwischen dem Verteilungsrechner VR und dem Abrechnungssystem AS nur mit der Übertragung von geringen Datenmengen belastet, so dass über diese Schnittstelle auch von anderen Netzelementen (beispielsweise anderen Verteilungsrechnern) Zahlungsabsicherungen bzw. Abrechnungen zur Vergebührung von Diensten durchgeführt werden können. Außerdem braucht insbesondere diese Schnittstelle nur für geringe Datenübertragungsraten ausgelegt zu werden. Die Diensterbringung in Form des Versendens von Nachrichten an die Kommunikationsendgeräte wird zeitlich gekoppelt mit der Zahlungsabsicherung (Reservierung von Ressourcen auf Konten der Dienstnutzer, Abbuchung von Ressourcen von den Konten der Dienstnutzer und/oder Erzeugen von Gebührentickets für eine spätere Rechnungserstellung). Durch eine zeitlich parallele Diensterbringung und Zahlungsabsicherung braucht mit dem Beginn des Versendens der einzelnen Dienstdatennachrichten an die Dienstnutzer nicht gewartet werden, bis die Zahlungsabsicherung für alle Dienstnutzer des Dienstes erfolgreich beendet ist. Dadurch ergibt sich ein sehr schnelles Verfahren zur Erbringung von Massendiensten und es wird eine effiziente Abrechnung dieser Massendienste durchgeführt.

## Patentansprüche

1. Verfahren zum Erbringen eines Dienstes für mehrere Dienstnutzer (KEG1, KEG3, KEG4) mittels eines Telekommunikationsnetzes (TKN), wobei bei dem Verfahren
- eine für alle Dienstnutzer gemeinsame Dienstnachricht (DN) von einer dienstanbietenden Diensteinrichtung (DE) zu einem Verteilungsrechner (VR) des Telekommunikationsnetzes (TKN) übertragen wird,
- von dem Verteilungsrechner (VR) eine Abrechnungsnachricht (AN) an ein Abrechnungssystem (AS) des Telekommunikationsnetzes (TKN) übertragen wird, wobei die Abrechnungsnachricht (AN) ein Kennzeichen (B) des Dienstes enthält,
- von dem Abrechnungssystem (AS) mittels des Kennzeichens (B) des Dienstes auf einen Dienstnutzerdatensatz (DSB) zugegriffen wird, in welchem die Dienstnutzer erfaßt sind,
- von dem Abrechnungssystem (AS) für die in dem Dienstnutzerdatensatz (DSB) erfaßten Dienstnutzer eine Zahlungsabsicherung für den Dienst vorgenommen wird, und
- daraufhin mittels des Verteilungsrechners (VR) der Dienst für diejenigen der mehreren Dienstnutzer erbracht wird, für die die Zahlungsabsicherung für den Dienst erfolgreich durchgeführt wurde.

2. Verfahren nach Anspruch 1,
**dadurch gekennzeichnet, dass**
- der Dienst für die Dienstnutzer erbracht wird, indem von dem Verteilungsrechner (VR) eine Dienstdatennachricht (DDN, DDN2) zu den Kommunikationsendgeräten (KEG1, KEG3) der Dienstnutzer übertragen wird.

3. Verfahren nach Anspruch 1 oder 2,
**dadurch gekennzeichnet, dass**
- als Dienstdatennachricht (DDN, DDN2) die Dienstnachricht (DN) oder eine modifizierte Dienstnachricht verwendet wird.

4. Verfahren nach einem der Ansprüche 1 bis 3,
**dadurch gekennzeichnet, dass**
- von dem Abrechnungssystem (AS) für jeden Dienstnutzer des Dienstnutzerdatensatzes (DSB) eine eigene Zahlungsabsicherung durchgeführt wird, und
- bei einer erfolgreichen Zahlungsabsicherung für den Dienst, welche einen der Dienstnutzer betrifft, unabhängig vom Erfolg der die anderen Dienstnutzer betreffenden Zahlungsabsicherungen mittels des Verteilungsrechners (VR) der Dienst für den einen Dienstnutzers erbracht wird.

5. Verfahren nach einem der vorhergehenden Ansprüche,
**dadurch gekennzeichnet, dass**
- im Fall einer erfolgreichen Zahlungsabsicherung für einen der Dienstnutzer die Erbringung des Dienstes (B) für den einen Dienstnutzer und die Zahlungsabsicherungen des Dienstes für die Dienstnutzer, für welche zu diesem Zeitpunkt keine erfolgreiche Zahlungsabsicherung vorliegt, zeitlich parallel durchgeführt werden.

6. Verfahren nach einem der vorhergehenden Ansprüche,
**dadurch gekennzeichnet, dass**
- von dem Abrechnungssystem (AS) eine Zahlungsabsicherungsbestätigungsnachricht (ABN) an den Verteilungsrechner (VR) übertragen wird, wenn die Zahlungsabsicherung für einen Dienstnutzer erfolgreich durchgeführt ist, und
- daraufhin mittels des Verteilungsrechners (VR) der Dienst für diesen Dienstnutzer erbracht wird.

7. Verfahren nach einem der Ansprüche 1 bis 5,
**dadurch gekennzeichnet, dass**
- der Dienstnutzerdatensatz (DSB) in einem Datenspeicher (SP) abgelegt ist, auf den sowohl das Abrechnungssystem (AS) als auch der Verteilungsrechner (VR) Zugriff haben,
- von dem Abrechnungssystem (AS) eine dienstnutzerbezogene Zahlungsabsicherungsinformation in dem Datenspeicher (SP) abgelegt wird, wenn die Zahlungsabsicherung für einen Dienstnutzer erfolgreich durchgeführt ist,
- von dem Verteilungsrechner (VR) aus dem Dienstnutzerdatensatz (DSB) Informationen über den Dienstnutzer ausgelesen werden, für den die dienstnutzerbezogene Zahlungsabsicherungsinformation in dem Datenspeicher (SP) abgelegt ist, und
- daraufhin mittels des Verteilungsrechners (VR) der Dienst für diesen Dienstnutzer erbracht (DDN, DDN2) wird.

8. Verfahren nach Anspruch 7,
**dadurch gekennzeichnet, dass**
- in vorgewählten Zeitabständen oder zu vorgewählten Zeitpunkten von dem Verteilungsrechner (VR) aus dem Dienstnutzerdatensatz (DSB) Informationen über eine Mehrzahl der Dienstnutzer ausgelesen werden, für die die dienstnutzerbezogene Zahlungsabsicherungsinformation in dem Datenspeicher (SP) abgelegt ist, und
- daraufhin mittels des Verteilungsrechners (VR) der Dienst für diejenigen Dienstnutzer erbracht (DDN, DDN2) wird, für die die Informationen aus dem Dienstnutzerdatensatz (DSB) ausgelesen worden sind.

9. Verfahren nach Anspruch 7 oder 8,
**dadurch gekennzeichnet, dass**
- der Zugriff des Abrechnungssystems (AS) und/oder des Verteilungsrechners (VR) auf den Datenspeicher (SP) unter Benutzung des Datenübertragungsprotokolls "Lightweight Directory Access Protocol" durchgeführt wird.

10. Verfahren nach einem der vorhergehenden Ansprüche,
**dadurch gekennzeichnet, dass**
- die Zahlungsabsicherung für den Dienst vorgenommen wird, indem ein dem Dienst zugeordneter Kontenbetrag von einem Konto (K1) des Dienstnutzers abgebucht wird.

11. Verfahren nach einem der Ansprüche 1 bis 9,
**dadurch gekennzeichnet, dass**
- die Zahlungsabsicherung für den Dienst vorgenommen wird, indem auf einem Konto (K1) des Dienstnutzers ein dem Dienst zugeordneter Kontenbetrag reserviert wird.

12. Verfahren nach Anspruch 11,
**dadurch gekennzeichnet, dass**
- der reservierte Kontenbetrag von dem Konto abgebucht wird, nachdem mittels des Verteilungsrechners (VR) der Dienst erbracht worden ist.

13. Verfahren nach einem der Ansprüche 10 bis 12,
**dadurch gekennzeichnet, dass**
- als Konto ein vorausbezahltes Guthabenkonto (K1) des Dienstnutzers verwendet wird.

14. Verfahren nach einem der vorhergehenden Ansprüche,
**dadurch gekennzeichnet, dass**
- zur Zahlungsabsicherung für den Dienst ein dem Dienstnutzer (KEG1) zugeordnetes Gebührenticket erzeugt wird.
